# EUROPÄISCHE PATENTANMELDUNG

(11) **EP 4 635 766 A1**
(43) Veröffentlichungstag der Anmeldung: **22.10.2025**
(21) Anmeldenummer: 25170030.8
(22) Anmeldetag: 11.04.2025
(51) Int. Cl.: B60H 1/34

(54) **VEKTORAUSSTRÖMER UND KRAFTFAHRZEUG**

(30) Priorität: 16.04.2024 DE 102024203511
(71) Anmelder: VOLKSWAGEN AG, 38440 Wolfsburg (DE)
(72) Erfinder: Böttcher, Eike, 38440 Wolfsburg (DE); Alt, Mirko, 38440 Wolfsburg (DE); Scheel, Cornelia, 38440 Wolfsburg (DE); Thomschke, Christoph, 38440 Wolfsburg (DE)

(57) **Zusammenfassung**

Vektorausströmer (1) für ein Belüftungssystem für ein Kraftfahrzeug, aufweisend ein Ausströmergehäuse (4), durch welches ein Luftkanal (5) mit einem Kanaleinlass (6) und einem Kanalauslass (7) gebildet ist, eine horizontal ausgebildete Kanaltrennwand (8), welche den Luftkanal (5) in einen ersten Teilkanal (5a) und einen zweiten Teilkanal (5b) unterteilt, eine Steuerklappe (9), die in Strömungsrichtung (S) vor der Kanaltrennwand (8) um eine quer zur Strömungsrichtung (S) ausgebildete erste Schwenkachse (R1) verschwenkbar angeordnet ist, und eine Mehrzahl von Ablenklamellen (10), die im ersten Teilkanal (5a) und zweiten Teilkanal (5b) angeordnet und jeweils um eine quer zu Strömungsrichtung (S) sowie quer zur ersten Schwenkachse (R1) ausgebildete zweite Schwenkachse (R2) verschwenkbar am Ausströmergehäuse (4) gehalten sind, wobei die Ablenklamellen (10) in Strömungsrichtung (S) eine Längserstreckung (L) von einem Lamellenkopfbereich (10a) über einen Lamellenzwischenbereich (10b) bis zu einem Lamellenfußbereich (10c) aufweisen, die zweiten Schwenkachsen (R2) jeweils im Lamellenfußbereich (10c) angeordnet sind, und der Lamellenfußbereich (10c) weniger als 20 % der Längserstreckung (L) der Ablenklamelle (10) umfasst.

## Beschreibung

Die vorliegende Erfindung betrifft einen Vektorausströmer für ein Belüftungssystem für ein Kraftfahrzeug. Ferner betrifft die Erfindung ein Kraftfahrzeug mit einem Belüftungssystem, welches einen gattungsgemäßen Vektorausströmer aufweist.

Es sind Belüftungssysteme für Kraftfahrzeuge bekannt, die einen Luftausströmer zum Ausströmen von Luft in eine Fahrgastzelle aufweisen. Gewöhnliche Luftausströmer weisen ein Ausströmergehäuse auf, durch welches ein Luftkanal mit einem Kanaleinlass und einem Kanalauslass gebildet ist. In dem Luftkanal sind eine oder mehrere vertikal verschwenkbare Luftleitlamellen zum Umlenken des Luftstroms nach links oder rechts in die Fahrgastzelle sowie eine oder mehrere horizontal verschwenkbare Luftleitlamellen zum Umlenken des Luftstroms nach oben oder unten in die Fahrgastzelle angeordnet. Die horizontal verschwenkbaren Luftleitlamellen können beispielsweise zum gemeinsamen Verschwenken miteinander mechanisch gekoppelt sein. Ebenso können die vertikal verschwenkbaren Luftleitlamellen zum gemeinsamen Verschwenken miteinander mechanisch gekoppelt sein.

Eine besondere Art von Luftausströmern ist der Vektorausströmer. Während bei einem gewöhnlichen Luftausströmer das vertikale Umlenken der Luftströmung direkt über die Luftleitlamellen erfolgt, erfolgt bei Vektorausströmern die vertikale Umlenkung des Luftstroms über zwei übereinander angeordnete Luftströme. Hierfür weisen Vektorausströmer im Luftkanal eine Kanaltrennwand auf, durch welche der Luftkanal in einen oberen Teilkanal und einen unteren Teilkanal unterteilt ist. Zum Steuern eines Luftmengenverhältnisses, und somit einer Strömungsaufteilung in den oberen Teilkanal und den unteren Teilkanal, ist in Strömungsrichtung vor der Kanaltrennwand eine Steuerklappe angeordnet.

Das Dokument FR 3 054 491 B1 zeigt einen Vektorausströmer, der eine Mehrzahl von Ablenklamellen aufweist, die in Strömungsrichtung etwa mittig um eine Schwenkachse an einem Ausströmergehäuse schwenkbar gelagert sind. Aus dem Dokument JP 73 94 541 B2 ist ein Vektorausströmer bekannt, bei welchem keine Ablenklamellen vorgesehen sind. Der Luftkanal ist durch Kanaltrennwände in einen oberen Teilkanal, einen mittleren Teilkanal und einen unteren Teilkanal unterteilt. Die Ablenkung des Luftstroms erfolgt einzig über die Aufteilung des Luftstroms in die Teilluftkanäle über eine Steuerklappe. Ein alternativer Lüftungsausströmer ist aus dem Dokument DE 10 2021 118 937 A1 bekannt. Aus den Dokumenten DE 10 2019 209 011 A1, DE 10 2021 117 250 A1, US 11 280 517 B1, JP 2011 - 112 313 A und DE 10 2022 202 119 A1 sind weitere Luftausströmer bekannt.

Bekannte Lüftungsausströmer haben den Nachteil, dass die Ablenklamellen mitunter in einen Ausströmbereich des Lüftungsausströmers hineinragen und somit in einem Sichtbereich des Lüftungsausströmers, welcher für einen in der Fahrgastzelle des Kraftfahrzeugs befindlichen Fahrgast einsehbar ist, angeordnet sind. Überdies weisen Lüftungsausströmer zum Ausströmen eines vordefinierten Luftstroms oftmals verhältnismäßig große Abmessungen auf, welche oftmals mit Designvorgaben von Fahrzeugcockpits kollidieren.

Es ist daher Aufgabe der vorliegenden Erfindung, die voranstehend beschriebenen Nachteile bei einem Lüftungsausströmer zu beheben oder zumindest teilweise zu beheben. Insbesondere ist es Aufgabe der vorliegenden Erfindung, einen Lüftungsausströmer und ein Kraftfahrzeug mit einem Belüftungssystem zu schaffen, die auf eine einfache und kostengünstige Art und Weise ein vergrößertes Verhältnis zwischen Lüftungsstrom und Bauraum und/oder eine verbesserte Kaschierung der Ablenklamellen bereitstellen.

Die voranstehende Aufgabe wird durch die Patentansprüche gelöst. Demnach wird die Aufgabe durch einen Vektorausströmer für ein Belüftungssystem für ein Kraftfahrzeug mit den Merkmalen des unabhängigen Anspruchs 1 sowie durch ein Kraftfahrzeug mit einem Belüftungssystem mit den Merkmalen des nebengeordneten Anspruchs 9 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Vektorausströmer beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch einen Vektorausströmer für ein Belüftungssystem für ein Kraftfahrzeug gelöst. Der Vektorausströmer weist ein Ausströmergehäuse, durch welches ein Luftkanal mit einem Kanaleinlass und einem Kanalauslass gebildet ist, eine horizontal ausgebildete Kanaltrennwand, welche den Luftkanal in einen ersten Teilkanal und einen zweiten Teilkanal unterteilt, eine Steuerklappe, die in Strömungsrichtung vor der Kanaltrennwand um eine quer zur Strömungsrichtung ausgebildete erste Schwenkachse verschwenkbar angeordnet ist, und eine Mehrzahl von Ablenklamellen auf, die im ersten Teilkanal und zweiten Teilkanal angeordnet und jeweils um eine quer zur Strömungsrichtung sowie quer zur ersten Schwenkachse ausgebildete zweite Schwenkachse verschwenkbar am Ausströmergehäuse gehalten sind. Die Ablenklamellen weisen in Strömungsrichtung eine Längserstreckung von einem Lamellenkopfbereich über einen Lamellenzwischenbereich bis zu einem Lamellenfußbereich auf. Erfindungsgemäß sind die zweiten Schwenkachsen jeweils im Lamellenfußbereich angeordnet, wobei der Lamellenfußbereich weniger als 20 % der Längserstreckung der Ablenklamelle umfasst. Der Luftkanal weist in Strömungsrichtung im Bereich der Ablenklamellen in Breitenrichtung eine Verjüngung auf.

Unter einer Strömungsrichtung wird die Richtung der unabgelenkten Luftströmung verstanden, beispielsweise wenn die Steuerklappe und die Ablenklamellen jeweils in einer Neutralstellung angeordnet sind.

Durch das Ausströmergehäuse ist der Luftkanal gebildet. Der Luftkanal weist den Kanaleinlass zum Einleiten eines Luftstroms zum Belüften einer Fahrgastzelle des Kraftfahrzeugs und den Kanalauslass zum gezielten Ausströmen des Luftstroms aus dem Luftkanal in die Fahrgastzelle auf. Der Luftkanal kann in Strömungsrichtung beispielsweise unterschiedliche Luftkanalbreiten und/oder unterschiedliche Luftkanalhöhen aufweisen. Es kann erfindungsgemäß vorgesehen sein, dass der Luftkanal in Strömungsrichtung eine gleichbleibende Querschnittsform oder veränderte Querschnittsformen aufweist. Vorzugsweise ist die Querschnittsform des Luftkanals rechteckig bzw. zumindest im Wesentlichen rechteckig. Hierbei ist es bevorzugt, dass die Luftkanalbreite größer ist als die Luftkanalhöhe.

Das Ausströmergehäuse kann beispielsweise aus einem Kunststoff hergestellt sein oder einen Kunststoff aufweisen. Das Ausströmergehäuse kann einteilig oder mehrteilig ausgebildet sein, beispielsweise aus einer ersten Gehäusehälfte und einer zweiten Gehäusehälfte zusammengesetzt. Ferner kann das Ausströmergehäuse beispielsweise im Bereich des Kanalauslasses ein Metall, wie beispielsweise Aluminium oder dergleichen, aufweisen, welches vorzugsweise den Kanalauslass umgibt. Der Kanalauslass kann beispielsweise gemäß einer Düse oder eines Diffusors ausgebildet sein. Über den Kanalauslass ist Luft aus dem Luftkanal in eine Fahrgastzelle des Kraftfahrzeugs einleitbar. Der Kanalauslass liegt somit im Sichtbereich von Insassen des Kraftfahrzeugs.

In dem Luftkanal ist die Kanaltrennwand angeordnet. Durch die Kanaltrennwand ist der Luftkanal in den ersten Luftkanal und den zweiten Luftkanal unterteilt. Der erste Luftkanal ist vorzugsweise als oberer Luftkanal und der zweite Luftkanal vorzugsweise als unterer Luftkanal ausgebildet. Alternativ kann der erste Luftkanal als rechter Luftkanal und der zweite Luftkanal als linker Luftkanal ausgebildet sein. Die Kanaltrennwand kann beispielsweise eine doppelte Wandung mit einer ersten Wandung zum Begrenzen des ersten Luftkanals und einer zweiten Wandung zum Begrenzen des zweiten Luftkanals aufweisen, wobei zwischen der ersten Wandung und der zweiten Wandung vorzugsweise ein Freiraum ausgebildet ist. Vorzugsweise sind die Ablenklamellen im Freiraum schwenkbar gelagert, beispielsweise zwischen der ersten Wandung und der zweiten Wandung. Weiter bevorzugt erstrecken sich die erste Wandung und die zweite Wandung von einem gemeinsamen Kontaktbereich in Strömungsrichtung sowie voneinander weg. Die erste Wandung ist vorzugsweise monolithisch mit der zweiten Wandung ausgebildet. Ein Querschnitt der Kanalwand kann beispielsweise U-förmig, V-förmig oder dergleichen ausgebildet sein, wobei die Schenkel der Kanalwand durch die erste Wandung und die zweite Wandung gebildet sind. Es kann erfindungsgemäß vorgesehen sein, dass die Kanaltrennwand mit dem Ausströmergehäuse oder einem Teil des Ausströmergehäuses, wie beispielsweise einer ersten Gehäusehälfte oder einer zweiten Gehäusehälfte, monolithisch ausgebildet ist. Alternativ kann auch ein erster Teil der Kanaltrennwand mit der ersten Gehäusehälfte und ein zweiter Teil der Kanaltrennwand mit der zweiten Gehäusehälfte monolithisch ausgebildet sein. In diesem Fall ist die Kanaltrennwand somit mehrteilig ausgebildet. Die Kanaltrennwand endet vorzugsweise in Strömungsrichtung vor dem Kanalauslass, sodass die Luftströme des ersten Teilkanals und des zweiten Teilkanals innerhalb des Vektorausströmers wieder zusammengeführt sind.

Die Steuerklappe ist in Strömungsrichtung vor der Kanaltrennwand angeordnet. Das bedeutet, dass von einem den Vektorausströmer durchströmenden Luftstrom zuerst die Steuerklappe und anschließend die Kanaltrennwand erreicht wird. Unter der Strömungsrichtung des Luftkanals wird im Rahmen der Erfindung die Richtung eines Luftstroms verstanden, welcher nicht durch die Steuerklappe oder die Ablenklamellen abgelenkt ist. Vorzugsweise ist die Steuerklappe fluchtend zur Kanaltrennwand angeordnet. Die Steuerklappe ist um die erste Schwenkachse verschwenkbar ausgebildet. Die erste Schwenkachse ist vorzugsweise parallel zu einer Fläche angeordnet, auf welcher sich die Kanaltrennwand erstreckt. Die erste Schwenkachse ist der Kanaltrennwand vorzugsweise direkt benachbart angeordnet, sodass ein auslenkbares erstes Ende der Steuerklappe der Strömungsrichtung entgegengerichtet und ein dem ersten Ende entgegengesetztes zweites Ende der Steuerklappe direkt an der ersten Schwenkachse angeordnet ist.

Die Steuerklappe ist ausgebildet, den durch den Luftkanal strömenden Luftstrom in den ersten Teilkanal und den zweiten Teilkanal aufzuteilen. Die Steuerklappe ist beispielsweise ausgebildet, in einer Neutralstellung den Luftstrom gleichmäßig auf den ersten Teilkanal und den zweiten Teilkanal aufzuteilen. Weiter bevorzugt ist die Steuerklappe ausgebildet, in einer ersten Extremstellung den zweiten Teilkanal abzudecken, sodass der gesamte durch den Luftkanal strömende Luftstrom in den ersten Teilkanal geführt wird. Ebenso bevorzugt ist die Steuerklappe ausgebildet, in einer zweiten Extremstellung den ersten Teilkanal abzudecken, sodass der gesamte durch den Luftkanal strömende Luftstrom in den zweiten Teilkanal geführt wird.

Die Ablenklamellen sind in Strömungsrichtung hinter der Steuerklappe angeordnet. Vorzugsweise sind die Ablenklamellen derart im Ausströmergehäuse angeordnet, dass die zweiten Schwenkachsen gleichmäßig verteilt nebeneinander angeordnet sind, sodass die Ablenklamellen ebenfalls gleichmäßig verteilt nebeneinander angeordnet sind. Die Ablenklamellen sind vorzugsweise über eine Verbindungsstrebe mechanisch miteinander derart gekoppelt, dass durch ein Bewegen der Verbindungsstrebe alle Ablenklamellen auslenkbar sind, vorzugsweise gleichermaßen auslenkbar. Die zweiten Schwenkachsen sind quer zur ersten Schwenkachse ausgebildet. Weiter bevorzugt sind die zweiten Schwenkachsen auf einer gemeinsamen Ebene angeordnet. Die erste Schwenkachse ist parallel zur Ebene der zweiten Schwenkachsen angeordnet. Die Strömungsrichtung ist vorzugsweise lotrecht zu dieser Ebene ausgebildet. Die Ablenklamellen können direkt oder indirekt, beispielsweise über eine Lagerleiste oder dergleichen, am Ausströmergehäuse gehalten sein.

Die Ablenklamellen weisen den Lamellenkopfbereich, den Lamellenzwischenbereich und den Lamellenfußbereich auf, wobei der Lamellenkopfbereich in einer Neutralstellung der Ablenklamellen der Strömungsrichtung entgegengerichtet ist. Der Lamellenfußbereich ist in Strömungsrichtung hinter dem Lamellenzwischenbereich angeordnet. Der Lamellenzwischenbereich ist in Strömungsrichtung hinter dem Lamellenkopfbereich angeordnet. Erfindungsgemäß verlaufen die zweiten Schwenkachsen durch den Lamellenfußbereich, wobei der Lamellenfußbereich weniger als 20 % der Längserstreckung der Ablenklamelle umfasst. Der Lamellenzwischenbereich und der Lamellenkopfbereich umfassen somit zusammen mehr als 80 % der Längserstreckung der Ablenklamelle. Die zweite Schwenkachse kann beispielsweise direkt neben dem Lamellenzwischenbereich durch den Lamellenkopfbereich verlaufen. Alternativ kann die zweite Schwenkachse auch weiter weg vom Lamellenzwischenbereich durch den Lamellenkopfbereich verlaufen.

Demnach sind die Ablenklamellen stark exzentrisch am Ausströmergehäuse gelagert. Somit unterscheiden sich die Ablenklamellen wesentlich von bekannten Ablenklamellen, bei welchen die zweite Schwenkachse etwa durch die Mitte des Lamellenzwischenbereichs verläuft.

Erfindungsgemäß weist der Luftkanal in Strömungsrichtung im Bereich der Ablenklamellen in Breitenrichtung eine Verjüngung auf. Die Verjüngung des Luftkanals ist vorzugsweise in Strömungsrichtung auf einer Höhe zwischen dem Lamellenkopfbereich und dem Lamellenfußbereich ausgebildet. Vorzugsweise ist die Verjüngung quer zur zweiten Schwenkachse ausgebildet, sodass die Gehäusewandung im Bereich der Verjüngung in Richtung einer Hauptfläche der Ablenklamellen verläuft. Bei einer senkrechten zweiten Schwenkachse verläuft die Verjüngung somit in Breitenrichtung des Vektorausströmers. Die erste Verjüngung ist vorzugsweise anteilig durch eine entsprechende Ausbildung der Gehäusewandung gebildet. Dies hat den Vorteil, dass mit einfachen Mitteln sowie auf eine kostengünstige Art und Weise bei reduziertem Bauraumbedarf eine besonders vorteilhafte Umlenkung des Luftstroms bewirkbar ist.

Vorzugsweise ist eine Betätigungsvorrichtung zum gezielten Verschwenken der Steuerklappe und/oder der Ablenklamellen vorgesehen. Die Betätigungsvorrichtung ist vorzugsweise an der Kanaltrennwand gehalten und mechanisch mit der Steuerklappe und/oder den Ablenklamellen gekoppelt.

Ein erfindungsgemäßer Vektorausströmer hat gegenüber herkömmlichen Vektorausströmern den Vorteil, dass mit einfachen Mitteln sowie auf eine kostengünstige Art und Weise bei reduzierten Abmessungen eine vordefinierte starke Auslenkung des Luftstroms bewirkbar ist, sodass das Verhältnis von maximaler Auslenkung zu Bauraumbedarf gegenüber herkömmlichen Vektorausströmern erheblich vergrößert ist. Durch die exzentrische Lagerung der Ablenklamellen können die äußeren Ablenklamellen näher an der Gehäusewandung des Ausströmergehäuses angeordnet werden. Überdies sind die Ablenklamellen durch die starke exzentrische Lagerung am Lamellenfußbereich entgegen der Strömungsrichtung weiter innerhalb des Ausströmergehäuses anordenbar als mittig gelagerte Ablenklamellen, sodass die Ablenklamellen des erfindungsgemäßen Vektorausströmers weiter aus dem Sichtbereich der Insassen der Fahrgastzelle herausgeführt sind.

Gemäß einer bevorzugten Weiterentwicklung der Erfindung kann bei einem Vektorausströmer vorgesehen sein, dass der Lamellenfußbereich 5 % der Längserstreckung der Ablenklamelle umfasst. Demnach umfassen der Lamellenzwischenbereich und der Lamellenkopfbereich zusammen 95 % der Längserstreckung der Ablenklamelle. Somit sind die Ablenklamellen besonders stark exzentrisch am Ausströmergehäuse gelagert und unterscheiden sich folglich besonders deutlich von bekannten Ablenklamellen, bei welchen die zweite Schwenkachse etwa durch die Mitte des Lamellenzwischenbereichs verläuft. Dies hat den Vorteil, dass mit einfachen Mitteln sowie auf eine kostengünstige Art und Weise bei reduziertem Bauraumbedarf eine besonders vorteilhafte Umlenkung des Luftstroms bewirkbar ist. Ferner sind die Ablenklamellen weiter aus dem Sichtbereich herausgeführt.

Es ist erfindungsgemäß bevorzugt, dass die Lamellenfußbereiche der äußeren Ablenklamellen fluchtend zu einer Gehäusewandung des Ausströmergehäuses am Kanalauslass angeordnet sind. Hierunter ist beispielsweise zu verstehen, dass die Lamellenfußbereiche dem Kanalauslass benachbart angeordnet sind, wobei sich die fluchtend zu den Lamellenfußbereichen angeordnete Gehäusewandung zum Kanalauslass erstreckt bzw. den Kanalauslass bildet. Die Lamellenfußbereiche sind vorzugsweise vom Kanalauslass beabstandet angeordnet, sodass die Ablenklamellen von der Fahrgastzelle schlechter einsehbar sind. Ferner ist es bevorzugt, dass die äußeren Ablenklamellen derart am Ausströmergehäuse angeordnet sind, dass der Luftstrom direkt von der äußeren Lamelle an eine Innenseite der Gehäusewandung unter Vermeidung von Verwirbelungen weiterleitbar ist. Dies hat den Vorteil, dass mit einfachen Mitteln sowie auf eine kostengünstige Art und Weise ein besonders geräuscharmer Betrieb des Vektorausströmers gewährleistet ist. Ferner sind die äußeren Ablenklamellen auf diese Weise durch die Gehäusewandung zumindest teilweise kaschiert und von der Fahrgastzelle aus schlechter oder gar nicht erkennbar.

Weiter bevorzugt weist der Luftkanal in Strömungsrichtung im Bereich der Ablenklamellen in Höhenrichtung eine Verjüngung auf. Die Verjüngung des Luftkanals ist vorzugsweise in Strömungsrichtung auf einer Höhe zwischen dem Lamellenkopfbereich und dem Lamellenfußbereich ausgebildet. Vorzugsweise ist die Verjüngung quer zur zweiten Schwenkachse ausgebildet, sodass die Gehäusewandung im Bereich der Verjüngung in Richtung einer Hauptfläche der Ablenklamellen verläuft. Die erste Verjüngung ist vorzugsweise anteilig durch eine entsprechende Ausbildung der Gehäusewandung gebildet. Dies hat den Vorteil, dass mit einfachen Mitteln sowie auf eine kostengünstige Art und Weise bei reduziertem Bauraumbedarf eine besonders vorteilhafte Umlenkung des Luftstroms bewirkbar ist.

In einer besonders bevorzugten Ausgestaltung der Erfindung kann bei einem Vektorausströmer vorgesehen sein, dass der Luftkanal in Strömungsrichtung in einem Bereich vor den Ablenklamellen in Breitenrichtung und/oder Höhenrichtung eine erste Aufweitung aufweist. Die erste Aufweitung des Luftkanals ist vorzugsweise in Strömungsrichtung auf einer Höhe zwischen einem mittleren Bereich der Steuerklappe und dem Lamellenkopfbereich ausgebildet. Vorzugsweise ist die erste Aufweitung quer zur zweiten Schwenkachse ausgebildet, sodass die Gehäusewandung im Bereich der ersten Aufweitung in eine Richtung von einer Hauptfläche der Ablenklamellen weg verläuft. Bei einer senkrechten zweiten Schwenkachse verläuft die erste Aufweitung somit in Breitenrichtung des Vektorausströmers. Es kann erfindungsgemäß vorgesehen sein, dass die erste Aufweitung parallel zur Richtung der zweiten Schwenkachse und somit in Höhenrichtung der Ablenklamellen verläuft. Bei einer senkrechten zweiten Schwenkachse verläuft die erste Aufweitung somit in Höhenrichtung des Vektorausströmers. Die erste Aufweitung ist vorzugsweise anteilig durch eine entsprechende Ausbildung der Gehäusewandung gebildet. Dies hat den Vorteil, dass mit einfachen Mitteln sowie auf eine kostengünstige Art und Weise bei reduziertem Bauraumbedarf eine besonders vorteilhafte Umlenkung des Luftstroms bewirkbar ist.

Vorzugsweise weist der Luftkanal in Strömungsrichtung in einem Bereich nach den Ablenklamellen in Breitenrichtung und/oder Höhenrichtung eine zweite Aufweitung auf. Die zweite Aufweitung des Luftkanals ist vorzugsweise in Strömungsrichtung auf einer Höhe zwischen dem Lamellenfußbereich und dem Kanalauslass ausgebildet. Vorzugsweise ist die zweite Aufweitung quer zur zweiten Schwenkachse ausgebildet, sodass die Gehäusewandung im Bereich der zweiten Aufweitung in eine Richtung von einer Hauptfläche der Ablenklamellen weg verläuft. Bei einer senkrechten zweiten Schwenkachse verläuft die zweite Aufweitung somit in Breitenrichtung des Vektorausströmers. Alternativ oder zusätzlich kann auch vorgesehen sein, dass der Luftkanal in Strömungsrichtung in dem Bereich nach den Ablenklamellen in Breitenrichtung und/oder Höhenrichtung eine zweite Verjüngung aufweist. So kann der Luftkanal beispielsweise in Breitenrichtung die zweite Aufweitung und in Höhenrichtung die zweite Verjüngung aufweisen. Die zweite Aufweitung und/oder zweite Verjüngung ist vorzugsweise jeweils anteilig durch eine entsprechende Ausbildung der Gehäusewandung gebildet. Dies hat den Vorteil, dass mit einfachen Mitteln sowie auf eine kostengünstige Art und Weise bei reduziertem Bauraumbedarf eine besonders vorteilhafte Umlenkung des Luftstroms bewirkbar ist.

Gemäß einer bevorzugten Ausführungsform der Erfindung kann bei einem Vektorausströmer vorgesehen sein, dass die Ablenklamellen einen ersten Lamellenbereich, einen zweiten Lamellenbereich und einen Verbindungsbereich, über welchen der erste Lamellenbereich mit dem zweiten Lamellenbereich mechanisch gekoppelt ist, aufweisen, wobei der erste Lamellenbereich im ersten Teilkanal, der zweite Lamellenbereich im zweiten Teilkanal und der Verbindungsbereich im Bereich der Kanaltrennwand angeordnet ist. Die zweite Schwenkachse erstreckt sich durch den ersten Lamellenbereich, den Verbindungsbereich und den zweiten Lamellenbereich. Vorzugsweise ist der Verbindungsbereich koaxial zur zweiten Schwenkachse ausgebildet. Vorzugsweise weist der Verbindungsbereich einen Exzenterabschnitt auf. Die Exzenterabschnitte der Ablenklamellen sind vorzugsweise an einer von der zweiten Schwenkachse entfernten Stelle über eine Verbindungsstange miteinander gekoppelt, sodass ein gleichmäßiges gemeinsames Verschwenken der Ablenklamellen gewährleistet ist. Dies hat den Vorteil, dass mit einfachen Mitteln sowie auf eine kostengünstige Art und Weise bei reduziertem Bauraumbedarf eine besonders vorteilhafte Umlenkung des Luftstroms bewirkbar ist.

Besonders bevorzugt weisen die Ablenklamellen vom Lamellenkopfbereich zum Lamellenfußbereich hin parallel zur zweiten Schwenkachse eine Vergrößerung auf. Mit anderen Worten sind die Ablenklamellen vorzugsweise derart ausgebildet, dass eine Lamellengrundfläche in Strömungsrichtung zur zweiten Schwenkachse hin zunimmt. Dies hat den Vorteil, dass mit einfachen Mitteln sowie auf eine kostengünstige Art und Weise bei reduziertem Bauraumbedarf eine besonders vorteilhafte Umlenkung des Luftstroms bewirkbar ist.

Es ist erfindungsgemäß bevorzugt, dass die Ablenklamellen derart verschwenkbar am Ausströmergehäuse angeordnet sind, dass der erste Teilkanal und/oder der zweite Teilkanal durch die Ablenklamellen verschlossen ist. Vorzugsweise sind die Ablenklamellen derart verschwenkbar am Ausströmergehäuse angeordnet, dass der erste Teilkanal und der zweite Teilkanal in einer Verschlussstellung der Ablenklamellen gleichzeitig verschlossen sind. Die Verschlussstellung ist vorzugsweise eine extreme verschwenkte Lage der Ablenklamellen in eine erste Schwenkrichtung. In dieser Lage liegt die äußere Ablenklamelle vorzugsweise an der Gehäusewandung an. Vorzugsweise sind benachbarte Ablenklamellen in dieser extrem verschwenkten Lage einander überlappend angeordnet. Weiter bevorzugt sind die Ablenklamellen derart ausgebildet, dass bei einem Verschwenken der Ablenklamellen in eine zweite Schwenkrichtung ein Verschließen des ersten Teilkanals und des zweiten Teilkanals durch die Ablenklamellen nicht bewirkbar ist. Dies ist vorzugsweise durch eine entsprechende Ausbildung der Gehäusewandung formschlüssig gewährleistet. Dies hat den Vorteil, dass mit einfachen Mitteln sowie auf eine kostengünstige Art und Weise bei reduziertem Bauraumbedarf ein besonders vorteilhaftes Sperren des Luftstroms bewirkbar ist, sodass beispielsweise bei Verwendung mehrerer Luftausströmer einzelne Vektorausströmer gezielt absperrbar sind.

Gemäß einem zweiten Aspekt der Erfindung wird die Aufgabe durch ein Kraftfahrzeug gelöst. Das Kraftfahrzeug weist ein Belüftungssystem zum Belüften einer Fahrgastzelle des Kraftfahrzeugs auf. Erfindungsgemäß weist das Belüftungssystem zum Auslassen von Luft in die Fahrgastzelle einen erfindungsgemäßen Vektorausströmer auf.

Vorzugsweise weist das Belüftungssystem mehrere Vektorausströme, insbesondere zwei, drei oder vier Vektorausströmer, auf. Der Vektorausströmer ist an einem Luftausgang eines Versorgungskanals des Belüftungssystems angeordnet. Somit ist ein über den Versorgungskanal bereitgestellter Luftstrom in den Luftkanal des Vektorausströmers und über den Kanalauslass des Vektorausströmers in die Fahrgastzelle leitbar. Über den Vektorausströmer ist eine Strömungsrichtung des Luftstroms gezielt veränderbar, vorzugsweise in eine horizontale Richtung und/oder eine vertikale Richtung.

Bei dem erfindungsgemäßen Kraftfahrzeug ergeben sich sämtliche Vorteile, die bereits zu einem Vektorausströmer gemäß dem ersten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise bei reduzierten Abmessungen eine vordefinierte starke Auslenkung des Luftstroms bewirkbar ist, sodass das Verhältnis von maximaler Auslenkung zu Bauraumbedarf gegenüber herkömmlichen Vektorausströmern erheblich vergrößert ist. Durch die exzentrische Lagerung der Ablenklamellen können die äußeren Ablenklamellen näher an der Gehäusewandung des Ausströmergehäuses angeordnet werden. Überdies sind die Ablenklamellen durch die starke exzentrische Lagerung am Lamellenfußbereich entgegen der Strömungsrichtung weiter innerhalb des Ausströmergehäuses anordenbar als mittig gelagerte Ablenklamellen, sodass die Ablenklamellen des erfindungsgemäßen Vektorausströmers weiter aus dem Sichtbereich der Insassen der Fahrgastzelle herausgeführt sind.

Ein erfindungsgemäßer Vektorausströmer sowie ein erfindungsgemäßes Kraftfahrzeug werden nachfolgend anhand von Zeichnungen näher erläutert. Es zeigen jeweils schematisch:
- Figur 1: in einer Schnittdarstellung von der Seite einen Vektorausströmer gemäß dem Stand der Technik,
- Figur 2: in einer Schnittdarstellung von der Seite einen Vektorausströmer gemäß einer bevorzugten ersten Ausführungsform der Erfindung,
- Figur 3: in einer Schnittdarstellung von der Seite einen Vektorausströmer gemäß einer bevorzugten zweiten Ausführungsform der Erfindung,
- Figur 4: in einer Schnittdarstellung von oben den Vektorausströmer aus Figur 3 in einer ersten Konfiguration,
- Figur 5: in einer Schnittdarstellung von oben den Vektorausströmer aus Figur 3 in einer zweiten Konfiguration,
- Figur 6: in einer Schnittdarstellung von oben den Vektorausströmer aus Figur 3 in einer dritten Konfiguration,
- Figur 7: in einer Schnittdarstellung von oben den Vektorausströmer aus Figur 3 in einer vierten Konfiguration, und
- Figur 8: in einer Seitenansicht eine bevorzugte Ausführungsform eines erfindungsgemäßen Kraftfahrzeugs.

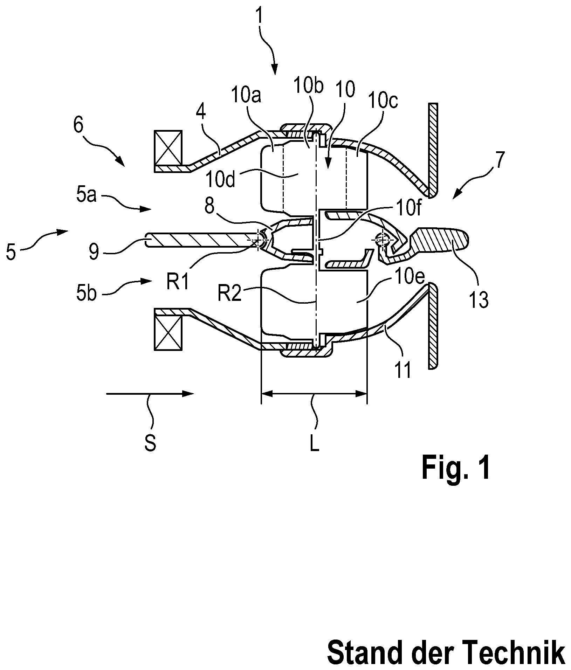

Elemente mit gleicher Funktion und Wirkungsweise sind in den Figuren 1 bis 8 jeweils mit denselben Bezugszeichen versehen.

In Fig. 1 ist ein Vektorausströmer 1 gemäß dem Stand der Technik schematisch in einer Schnittdarstellung von der Seite abgebildet. Der Vektorausströmer 1 weist ein Ausströmergehäuse 4 mit einer Gehäusewandung 11 auf, durch welches ein Luftkanal 5 mit einem Kanaleinlass 6 und einem Kanalauslass 7 gebildet ist. Im Luftkanal 5 ist eine Kanaltrennwand 8 angeordnet, die etwa einen v-förmigen Querschnitt aufweist. Durch die Kanaltrennwand 8 ist der Luftkanal 5 in einen oberen ersten Teilkanal 5a und einen unteren zweiten Teilkanal 5b unterteilt. Zum Aufteilen eines durch den Luftkanal 5 strömenden Luftstroms auf den ersten Teilkanal 5a und den zweiten Teilkanal 5b ist eine um eine erste Schwenkachse R1 verschwenkbare Steuerklappe 9 im Luftkanal 5 angeordnet. Die erste Schwenkachse R1 ist direkt an der Kanaltrennwand 8 angeordnet.

Am Ausströmergehäuse 4 sind in Strömungsrichtung S hinter der Steuerklappe 9 mehrere Ablenklamellen 10 angeordnet, von denen in dieser Ansicht nur eine vordere Ablenklamelle 10 erkennbar ist, durch welche die hinteren Ablenklamellen 10 verdeckt sind. Die Ablenklamelle 10 weist in Strömungsrichtung S eine Längserstreckung L mit einem Lamellenkopfbereich 10a, einem Lamellenzwischenbereich 10b und einem Lamellenfußbereich 10c auf. Die Ablenklamelle 10 ist um eine zweite Schwenkachse R2, welche sich durch den Lamellenzwischenbereich 10b in der Mitte der Ablenklamelle 10 erstreckt, schwenkbar am Ausströmergehäuse 4 gehalten.

Ein erster Lamellenbereich 10d der Ablenklamelle 10 ist im ersten Teilkanal 5a und ein zweiter Lamellenbereich 10e der Ablenklamelle 10 ist im zweiten Teilkanal 5b angeordnet. Der erste Lamellenbereich 10d ist über einen Verbindungsbereich 10f mit dem zweiten Lamellenbereich 10e verbunden. Der Verbindungsbereich 10f erstreckt sich koaxial zur zweiten Schwenkachse R2. Zum gezielten Verschwenken der Steuerklappe 9 und der Ablenklamellen 10 ist im Bereich des Kanalauslasses 7 eine Betätigungsvorrichtung 13 verschwenkbar an der Kanaltrennwand 8 gehalten. Der Lamellenfußbereich 10c der Ablenklamelle 10 ragt derart weit zum Kanalauslass 7 hin, dass das Ausströmergehäuse 4 verhältnismäßig große Abmessungen aufweisen muss, um ein Verschwenken der Ablenklamellen 10 zu gewährleisten.

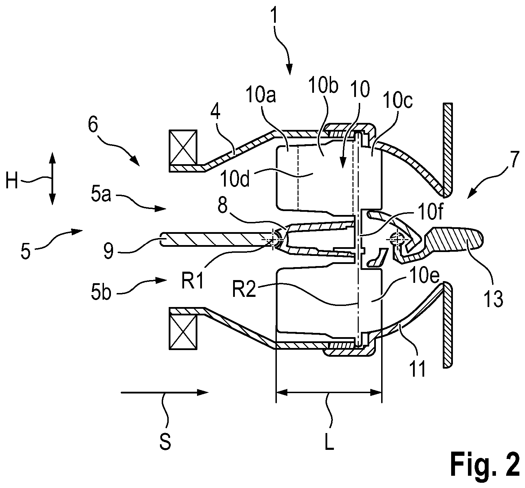

Fig. 2 zeigt einen Vektorausströmer 1 gemäß einer bevorzugten ersten Ausführungsform der Erfindung schematisch in einer Schnittdarstellung von der Seite. Der Vektorausströmer 1 weist ein Ausströmergehäuse 4 mit einer Gehäusewandung 11 auf, durch welches ein Luftkanal 5 mit einem Kanaleinlass 6 und einem Kanalauslass 7 gebildet ist. Im Luftkanal 5 ist eine Kanaltrennwand 8 angeordnet, die etwa einen v-förmigen Querschnitt aufweist. Durch die Kanaltrennwand 8 ist der Luftkanal 5 in einen oberen ersten Teilkanal 5a und einen unteren zweiten Teilkanal 5b unterteilt. Zum Aufteilen eines durch den Luftkanal 5 strömenden Luftstroms auf den ersten Teilkanal 5a und den zweiten Teilkanal 5b ist eine um eine erste Schwenkachse R1 verschwenkbare Steuerklappe 9 im Luftkanal 5 angeordnet. Die erste Schwenkachse R1 ist direkt an der Kanaltrennwand 8 angeordnet.

Am Ausströmergehäuse 4 sind in Strömungsrichtung S hinter der Steuerklappe 9 mehrere Ablenklamellen 10 angeordnet, von denen in dieser Ansicht nur eine vordere Ablenklamelle 10 erkennbar ist, durch welche die hinteren Ablenklamellen 10 verdeckt sind. Die Ablenklamelle 10 weist in Strömungsrichtung S eine Längserstreckung L mit einem Lamellenkopfbereich 10a, einem Lamellenzwischenbereich 10b und einem Lamellenfußbereich 10c auf. Die Ablenklamelle 10 ist um eine zweite Schwenkachse R2, welche sich durch den Lamellenfußbereich 10c, welcher etwa 20 % einer Gesamtlänge der Ablenklamelle 10 aufweist, sowie dem Lamellenzwischenbereich 10b direkt benachbart erstreckt, schwenkbar am Ausströmergehäuse 4 gehalten.

Ein erster Lamellenbereich 10d der Ablenklamelle 10 ist im ersten Teilkanal 5a und ein zweiter Lamellenbereich 10e der Ablenklamelle 10 ist im zweiten Teilkanal 5b angeordnet. Der erste Lamellenbereich 10d ist über einen Verbindungsbereich 10f mit dem zweiten Lamellenbereich 10e verbunden. Der Verbindungsbereich 10f erstreckt sich koaxial zur zweiten Schwenkachse R2. Zum gezielten Verschwenken der Steuerklappe 9 und der Ablenklamellen 10 ist im Bereich des Kanalauslasses 7 eine Betätigungsvorrichtung 13 verschwenkbar an der Kanaltrennwand 8 gehalten. Durch die Anordnung der zweiten Schwenkachse R2 im Lamellenfußbereich 10c ist ein Abstand zwischen dem Lamellenfußbereich 10c und dem Kanalauslass 7 gegenüber dem Stand der Technik reduziert, sodass die Abmessungen des erfindungsgemäßen Ausströmergehäuses 4 im Bereich des Kanalauslasses 7 wesentlich reduziert sind.

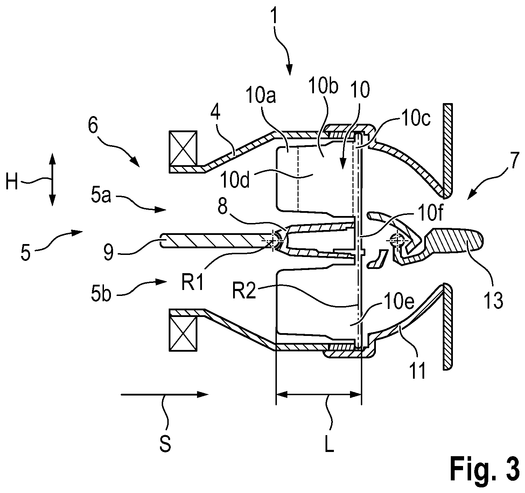

In Fig. 3 ist ein Vektorausströmer 1 gemäß einer bevorzugten zweiten Ausführungsform der Erfindung schematisch in einer Schnittdarstellung von der Seite dargestellt. Der Vektorausströmer 1 gemäß der bevorzugten zweiten Ausführungsform der Erfindung unterscheidet sich vom Vektorausströmer 1 gemäß der bevorzugten ersten Ausführungsform der Erfindung in einer Ausbildung und Anordnung der Ablenklamellen 10. In diesem Ausführungsbeispiel weist der Lamellenfußbereich 10c etwa 5 % der Gesamtlänge der Ablenklamelle 10 auf. Somit ist der Abstand zwischen dem Lamellenfußbereich 10c und dem Kanalauslass 7 weiter reduziert. Dies ermöglicht eine weitere Verringerung der Abmessungen des Ausströmergehäuses 4 im Bereich des Kanalauslasses 7.

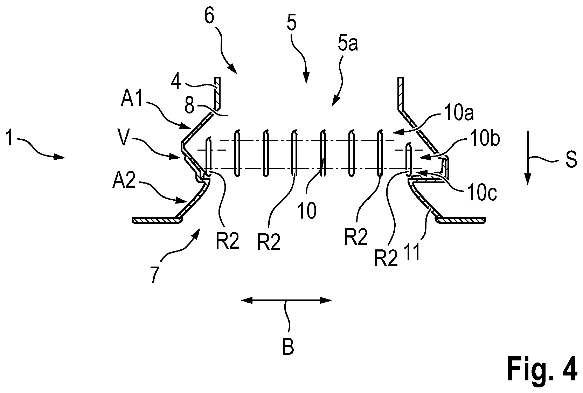

Fig. 4 zeigt den Vektorausströmer 1 aus Fig. 3 in einer ersten Konfiguration schematisch in einer Schnittdarstellung von oben. In dieser Ansicht ist der erste Teilkanal 5a des Luftkanals 5 erkennbar. Der zweite Teilkanal 5b ist durch die Kanaltrennwand 8 verdeckt. Die Steuerklappe 9 ist nicht dargestellt. In dieser Ansicht ist erkennbar, dass der Luftkanal 5 durch die Ausbildung der Gehäusewandung 11 des Ausströmergehäuses 4 in Strömungsrichtung S vor den Ablenklamellen 10 bis zu einem mittleren Bereich der Ablenklamellen 10 zunächst eine erste Aufweitung A1 in Breitenrichtung B, anschließend bis zu den zweiten Schwenkachsen R2 der Ablenklamellen 10 eine Verjüngung V in Breitenrichtung B und schließlich bis zum Kanalauslass 7 eine zweite Aufweitung A2 in Breitenrichtung B aufweist. Die äußeren Ablenklamellen 10 sind in Strömungsrichtung S fluchtend zur Gehäusewandung 11 angeordnet. In der dargestellten ersten Konfiguration sind die Ablenklamellen 10 parallel zur Strömungsrichtung S angeordnet. Somit erfolgt keine Ablenkung des Luftstroms durch die Ablenklamellen 10.

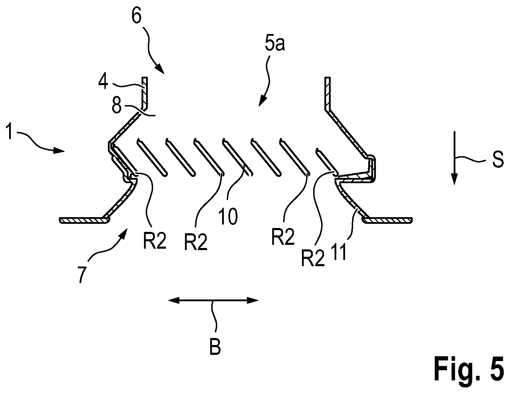

In Fig. 5 ist der Vektorausströmer 1 aus Fig. 3 in einer zweiten Konfiguration schematisch in einer Schnittdarstellung von oben dargestellt. In der zweiten Konfiguration sind die Ablenklamellen 10 maximal gegen den Uhrzeigersinn um die zweite Schwenkachse R2 verschwenkt, sodass die äußere Ablenklamelle 10 an der Gehäusewandung 11 des Ausströmergehäuses 4 anliegt. Somit erfolgt eine Ablenkung des Luftstroms durch die Ablenklamellen 10 nach rechts.

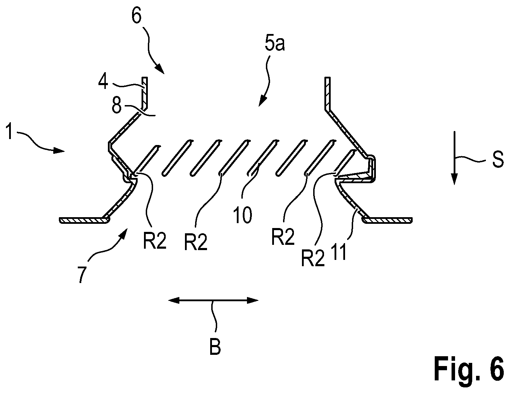

Fig. 6 zeigt den Vektorausströmer 1 aus Fig. 3 in einer dritten Konfiguration schematisch in einer Schnittdarstellung von oben. In der dritten Konfiguration sind die Ablenklamellen 10 im Uhrzeigersinn um die zweite Schwenkachse R2 derart verschwenkt, dass der Luftstrom etwa im gleichen Winkel wie bei der in Fig. 5 dargestellten zweiten Konfiguration in die andere Richtung, also nach links, abgelenkt wird. Aufgrund der asymmetrischen Ausbildung der Gehäusewandung 11 liegt die äußere Ablenklamelle 10 in der dritten Konfiguration nicht an der Gehäusewandung 11 des Ausströmergehäuses 4 an.

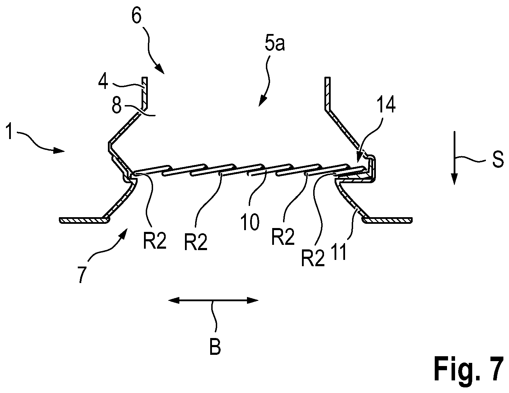

In Fig. 7 ist der Vektorausströmer 1 aus Fig. 3 in einer vierten Konfiguration schematisch in einer Schnittdarstellung von oben abgebildet. In der vierten Konfiguration sind die Ablenklamellen 10 maximal im Uhrzeigersinn um die zweite Schwenkachse R2 verschwenkt, sodass die äußere Ablenklamelle 10 in einer Aufnahmetasche 14 der Gehäusewandung 11 des Ausströmergehäuses 4 angeordnet ist. Zudem sind die Ablenklamellen 10 einander überlappend angeordnet, sodass der Luftkanal 5 durch die Ablenklamellen 10 verschlossen ist.

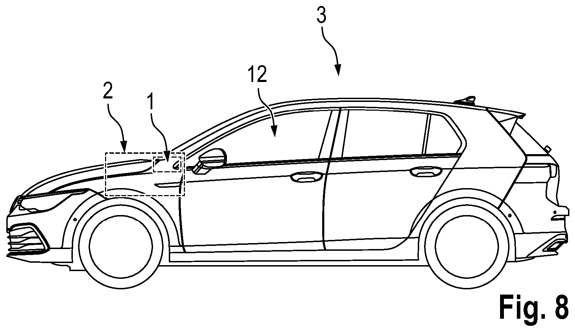

Fig. 8 zeigt eine bevorzugte Ausführungsform eines erfindungsgemäßen Kraftfahrzeugs 3 schematisch in einer Seitenansicht. Das Kraftfahrzeug 3 weist ein Belüftungssystem 2 mit einem erfindungsgemäßen Vektorausströmer 1 auf. Über den Vektorausströmer 1 ist Luft gerichtet in eine Fahrgastzelle 12 des Kraftfahrzeugs 3 einleitbar.

### Bezugszeichenliste

- 1: Vektorausströmer
- 2: Belüftungssystem
- 3: Kraftfahrzeug
- 4: Ausströmergehäuse
- 5: Luftkanal
- 5a: erster Teilkanal
- 5b: zweiter Teilkanal
- 6: Kanaleinlass
- 7: Kanalauslass
- 8: Kanaltrennwand
- 9: Steuerklappe
- 10: Ablenklamelle
- 10a: Lamellenkopfbereich
- 10b: Lamellenzwischenbereich
- 10c: Lamellenfußbereich
- 10d: erster Lamellenbereich
- 10e: zweiter Lamellenbereich
- 10f: Verbindungsbereich
- 11: Gehäusewandung
- 12: Fahrgastzelle
- 13: Betätigungsvorrichtung
- 14: Aufnahmetasche

- A1: erste Aufweitung
- A2: zweite Aufweitung
- B: Breitenrichtung
- G: Vergrößerung
- H: Höhenrichtung
- L: Längserstreckung
- R1: erste Schwenkachse
- R2: zweite Schwenkachse
- S: Strömungsrichtung
- V: Verjüngung

## Patentansprüche

1. Vektorausströmer (1) für ein Belüftungssystem (2) für ein Kraftfahrzeug (3), aufweisend ein Ausströmergehäuse (4), durch welches ein Luftkanal (5) mit einem Kanaleinlass (6) und einem Kanalauslass (7) gebildet ist, eine horizontal ausgebildete Kanaltrennwand (8), welche den Luftkanal (5) in einen ersten Teilkanal (5a) und einen zweiten Teilkanal (5b) unterteilt, eine Steuerklappe (9), die in Strömungsrichtung (S) vor der Kanaltrennwand (8) um eine quer zur Strömungsrichtung (S) ausgebildete erste Schwenkachse (R1) verschwenkbar angeordnet ist, und eine Mehrzahl von Ablenklamellen (10), die im ersten Teilkanal (5a) und zweiten Teilkanal (5b) angeordnet und jeweils um eine quer zur Strömungsrichtung (S) sowie quer zur ersten Schwenkachse (R1) ausgebildete zweite Schwenkachse (R2) verschwenkbar am Ausströmergehäuse (4) gehalten sind, wobei die Ablenklamellen (10) in Strömungsrichtung (S) eine Längserstreckung (L) von einem Lamellenkopfbereich (10a) über einen Lamellenzwischenbereich (10b) bis zu einem Lamellenfußbereich (10c) aufweisen,
**dadurch gekennzeichnet,**
**dass** die zweiten Schwenkachsen (R2) jeweils im Lamellenfußbereich (10c) angeordnet sind, wobei der Lamellenfußbereich (10c) weniger als 20 % der Längserstreckung (L) der Ablenklamelle (10) umfasst, wobei der Luftkanal (5) in Strömungsrichtung (S) im Bereich der Ablenklamellen (10) in Breitenrichtung (B) eine Verjüngung (V) aufweist.

2. Vektorausströmer (1) nach Anspruch 1,
**dadurch gekennzeichnet,**
**dass** der Lamellenfußbereich (10c) 5 % der Längserstreckung (L) der Ablenklamelle (10) umfasst.

3. Vektorausströmer (1) nach Anspruch 1 oder 2,
**dadurch gekennzeichnet,**
**dass** die Lamellenfußbereiche (10c) der äußeren Ablenklamellen (10) fluchtend zu einer Gehäusewandung (11) des Ausströmergehäuses (4) am Kanalauslass (7) angeordnet sind.

4. Vektorausströmer (1) nach einem der vorangegangenen Ansprüche,
**dadurch gekennzeichnet,**
**dass** der Luftkanal (5) in Strömungsrichtung (S) im Bereich der Ablenklamellen (10) in Höhenrichtung (H) eine Verjüngung (V) aufweist.

5. Vektorausströmer (1) nach einem der vorangegangenen Ansprüche,
**dadurch gekennzeichnet,**
**dass** der Luftkanal (5) in Strömungsrichtung (S) in einem Bereich vor den Ablenklamellen (10) in Breitenrichtung (B) und/oder Höhenrichtung (H) eine erste Aufweitung (A1) aufweist.

6. Vektorausströmer (1) nach einem der vorangegangenen Ansprüche,
**dadurch gekennzeichnet,**
**dass** der Luftkanal (5) in Strömungsrichtung (S) in einem Bereich nach den Ablenklamellen (10) in Breitenrichtung (B) und/oder Höhenrichtung (H) eine zweite Aufweitung (A2) aufweist.

7. Vektorausströmer (1) nach einem der vorangegangenen Ansprüche,
**dadurch gekennzeichnet,**
**dass** die Ablenklamellen (10) einen ersten Lamellenbereich (10d), einen zweiten Lamellenbereich (10e) und einen Verbindungsbereich (10f), über welchen der erste Lamellenbereich (10d) mit dem zweiten Lamellenbereich (10e) mechanisch gekoppelt ist, aufweisen, wobei der erste Lamellenbereich (10d) im ersten Teilkanal (5a), der zweite Lamellenbereich (10e) im zweiten Teilkanal (5b) und der Verbindungsbereich (10f) im Bereich der Kanaltrennwand (8) angeordnet ist.

8. Vektorausströmer (1) nach einem der vorangegangenen Ansprüche,
**dadurch gekennzeichnet,**
**dass** die Ablenklamellen (10) vom Lamellenkopfbereich (10a) zum Lamellenfußbereich (10c) hin parallel zur zweiten Schwenkachse (R2) eine Vergrößerung (G) aufweisen.

9. Vektorausströmer (1) nach einem der vorangegangenen Ansprüche,
**dadurch gekennzeichnet,**
**dass** die Ablenklamellen (10) derart verschwenkbar am Ausströmergehäuse (4) angeordnet sind, dass der erste Teilkanal (5a) und/oder der zweite Teilkanal (5b) durch die Ablenklamellen (10) verschlossen ist.

10. Kraftfahrzeug (3), aufweisend ein Belüftungssystem (2) zum Belüften einer Fahrgastzelle (12) des Kraftfahrzeugs (3),
**dadurch gekennzeichnet,**
**dass** das Belüftungssystem (2) zum Auslassen von Luft in die Fahrgastzelle (12) einen Vektorausströmer (1) nach einem der vorangegangenen Ansprüche aufweist.
